# EUROPEAN PATENT SPECIFICATION

(11) **EP 1 630 461 B1**
(45) Date of publication and mention of the grant of the patent: **17.10.2007**
(21) Application number: 05012954.3
(22) Date of filing: 16.06.2005
(51) Int. Cl.: F16J 15/06, F16J 15/32, F16J 15/54

(54) **Seal member attaching structure and seal member co-rotation preventive shaft member**
Haltevorrichtung für ein Abdichtelement und Welle die das Mitrotieren des Abdichtelements verhindert
Dispositif de fixation d'un élément d'étanchéité et arbre retenant ledit élément d'étanchéité

(30) Priority: 27.08.2004 JP 2004248691
(43) Date of publication of application: 01.03.2006
(73) Proprietor: Carl Freudenberg KG, 69469 Weinheim (DE)
(72) Inventor: Yoshikawa, Ken, Fukushima-shi Fukushima 960-1193 (JP)

(56) References cited:
- EP-A- 0 766 027
- DE-A1- 2 104 802
- DE-A1- 3 223 342
- DE-C- 953 029
- US-A- 2 438 153
- US-A- 3 291 495

## Description

### BACKGROUND OF THE INVENTION

### Field of the Invention

The present invention relates to a seal member attaching structure preferable for attaching a seal member, for example, used under a high pressure, and a seal member co-rotation preventive shaft member.

### Description of the Related Art

In conventional, this kind of attaching structure of the seal member is structured such that an annular seal member made of a rubber-like elastic member is provided in an annular gap between two members assembled so as to be concentrically and relatively rotatable with each other, and the seal member is attached to an attachment groove provided in one member and is brought into slidably sealing contact with the other member.

However, a groove bottom surface and a groove side surface of a conventional attachment groove are formed in a flat surface and have a small friction force with respect to a seal member, and a sliding friction torque with respect to the other members becomes larger than a static friction torque between the seal member and the attachment groove, whereby there is a case that the seal member co-rotates with the member in the sliding side. Then, there is a risk that the seal member slides with the groove side surface and the groove bottom surface of the attachment groove so as to generate an early abrasion.

In particular, in the case that a shaft member provided with the attachment groove is made of a resin, the abrasion is remarkably generated if the co-rotation is generated. The document US-A 2,438,153 discloses a seal member attaching structure which seals an annular gap between two members mutually concentrically and relatively rotatably assembled and in which an annular seal member formed of a rubber-like elastic material is attached to an attachment groove disposed in one member and brought into slidably sealing contact with the other member, the structure comprising: rotation preventive means for allowing the seal member to partially bite a groove side surface of the attachment groove and preventing the seal member from being relatively rotated.

In a similar manner, the documents EP-A 0 766 027, US-A 3,291,495 and DE 953 029 C also disclose all these features.

The documents DE 32 23 342 A1 and DE 21 04 802 A1 disclose a seal member co-rotation preventive shaft member attached to a shaft hole in a housing in such a manner as to be relatively rotatable with respect to the housing via a predetermined annular gap, and comprising an attachment groove to whose outer periphery a seal member is attached, the shaft member comprising: rotation preventive means for partially engaging the seal member with a groove side surface of the attachment groove, and preventing the seal member from being relatively rotated.

### SUMMARY OF THE INVENTION

An object of the present invention is to provide a seal member attaching structure and a seal member co-rotation preventive shaft which can prevent an abrasion of an attachment groove so as to achieve a long service life.

The present invention employs the following means for solving the problem mentioned above.

In other words, in accordance with the present invention, there is provided a seal member attaching structure which seals an annular gap between two members mutually concentrically and relatively rotatably assembled and in which an annular seal member formed of a rubber-like elastic material is attached to an attachment groove disposed in one member and brought into slidably sealing contact with the other member, the structure comprising:
rotation preventive means for allowing the seal member to partially bite a groove side surface of the attachment groove with which the seal member is brought into close contact, and preventing the seal member from being relatively rotated wherein a plurality of cutouts are arranged in the groove side surface in parallel with a first center line passing through a section center of the shaft member in which the attachment groove is disposed.

In accordance with this structure, the seal member brought into close contact with the groove side surface of the attachment groove of one member partly bits the rotation preventive means. Accordingly, even if the sliding friction torque between the other member and the seal member becomes larger than the static friction torque between the seal member and the attachment groove, the rotation is regulated by the biting engagement between the seal member and the rotation preventing means. Accordingly, it is possible to prevent the co-rotation of the seal member, and it is possible to prevent the sliding friction between the attachment groove and the seal member. Accordingly, it is possible to form the cutout by a die forming.

In this case, it is preferable that the rotation preventive means is a cutout which is partially bitten by the seal member.

Accordingly, it is possible to prevent the co-rotation of the seal member on the basis of a simple structure.

Further, it is preferable that a member in which the attachment groove is disposed is a shaft member.

In this case, it is preferable that the shaft member is a resin formed member.

As mentioned above, even if the shaft member is constituted by the resin formed member, the sliding abrasion can be prevented. Accordingly, it is possible to achieve a weight saving and a long service life of parts.

Further, it is preferable that the cutouts are arranged in parallel with a first center line passing through a section center of the shaft member.

Further, in accordance with the present invention, there is provided a seal member co-rotation preventive shaft member attached to a shaft hole in a housing in such a manner as to be relatively rotatable with respect to the housing via a predetermined annular gap, and comprising an attachment groove to whose outer periphery a seal member is attached, the shaft member comprising:
the one member with the attachment groove, the annular member and
rotation preventive means for partially engaging the seal member with a groove side surface of the attachment groove, and preventing the seal member from being relatively rotated wherein a plurality of cutouts are arranged in said groove side surface in parallel with a first center line passing through a section center of the shaft member.

In accordance with the present invention, the rotation is regulated by the biting engagement between the seal member and the rotation preventing means, it is possible to prevent the abrasion of the attachment groove on the basis of the co-rotation of the seal member, and it is possible to achieve the shaft member having a long service life.

In this case, it is preferable that the shaft member is a resin formed member.

Accordingly, it is possible to achieve a weight saving and a long service life of the shaft member.

In this case, each of the structures mentioned above can be employed by combining as many as possible.

### Effect of the Invention

As described above, in accordance with the present invention, it is possible to prevent the abrasion of the attachment groove so as to achieve a long service life.

### BRIEF DESCRIPTION OF THE DRAWINGS

Fig. 1 is a vertical cross sectional view of a main portion showing a seal member attaching structure in accordance with an embodiment of the present invention;
Fig. 2 is a front elevational view showing a shaft member shown in Fig. 1 by picking up;
Fig. 3 is a cross sectional view along a line C-C in Fig. 2;
Fig. 4 is a view showing a state in which a seal member attached to an attachment groove bites into a cutout of a groove side surface; and
Fig. 5 is an enlarged view of a portion E in Fig. 4.

### DESCRIPTION OF THE PREFERRED EMBODIMENT

A description will be in detail given below of a best mode for carrying out the invention in an illustration manner on the basis of an embodiment with reference to the accompanying drawings. In this case, a size, a material, a shape, a relative arrangement and the like of constituting parts described in this embodiment do not limit the scope of the invention unless any specific description exists.

### [Embodiment 1]

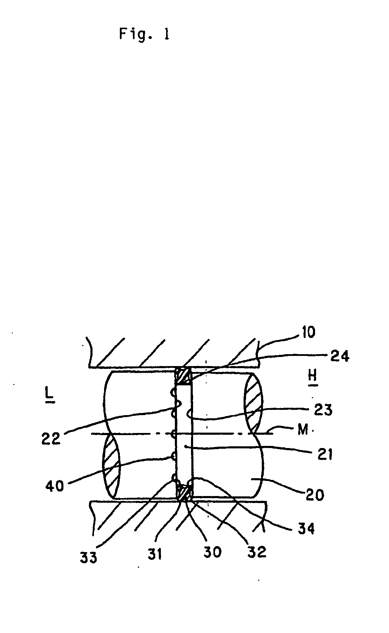

A description will be given of a seal member attaching structure and a seal member co-rotation preventive shaft in accordance with an embodiment of the present invention with reference to Figs. 1 to 5.

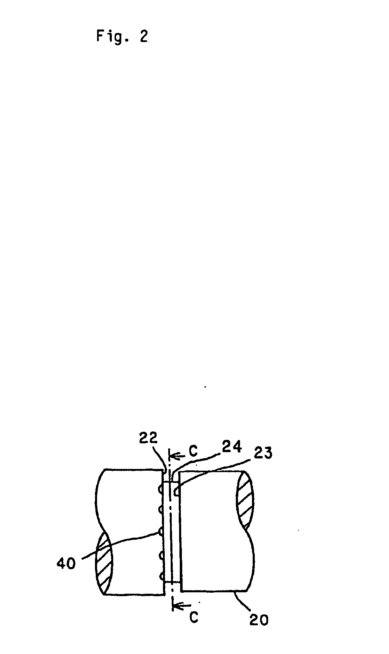

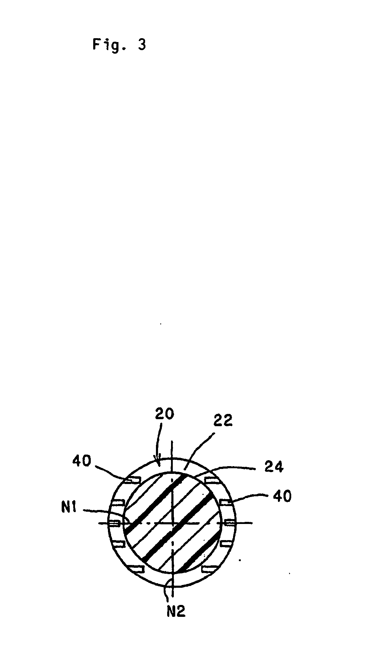

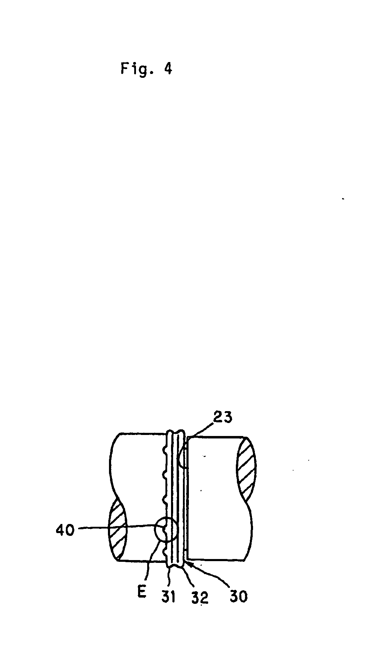

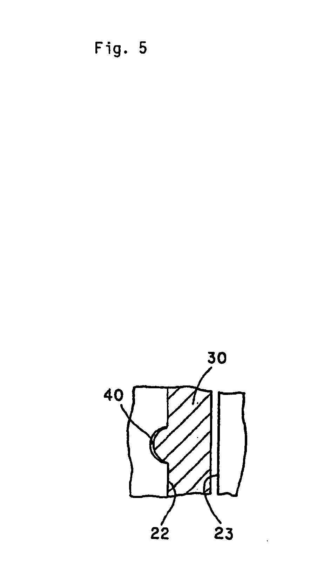

Fig. 1 is a vertical cross sectional view of a main portion showing a seal member attaching structure in accordance with an embodiment of the present invention, Fig. 2 is a front elevational view showing a shaft member shown in Fig. 1 by picking up, Fig. 3 is a cross sectional view along a line C-C in Fig. 2, Fig. 4 is a view showing a state in which a seal member attached to an attachment groove bites into a cutout of a groove side surface, and Fig. 5 is an enlarged view of a portion E in Fig. 4.

A seal member 30 in accordance with the present embodiment seals an annular gap between a shaft member 20 and a housing 10 provided with a shaft hole to which the shaft member 20 is inserted. The shaft member 20 and the housing 10 are concentrically assembled so as to be relatively rotatable with each other. Further, an annular seal member 30 made of a rubber-like elastic material is attached to an attachment groove 21 provided in the shaft member 20, and is brought into slidably sealing contact with the other housing 10.

Further, in accordance with the present embodiment, the seal member 30 is partially engaged with a groove side surface of the attachment groove 21, and a cutout 40 serving as a rotation preventive means for inhibiting a relative rotation of the seal member 30 is provided.

In this case, the shaft member 20 is constituted by a cylindrical resin formed member, and is provided with the attachment groove 21 having a rectangular cross sectional shape in an outer peripheral surface of the shaft member 20. The attachment groove 21 is provided with a pair of first groove side surface 22 and second groove side surface 23 which are orthogonal to a center axis M of the shaft member 20, and a cylindrical groove bottom surface 24 which is formed at a predetermined diameter smaller than an outer periphery of the shaft member 20.

The seal member 30 is constituted by a squeeze packing, and a so-called X-ring having an X cross sectional shape is employed in this embodiment. In other words, the seal member 30 has a first outer-diameter lip 31 and a second outer-diameter lip 32 in an outer diameter side, and a first inner-diameter lip 33 and a second inner-diameter lip 34 in an inner diameter side, and is formed in an X cross sectional shape. The first outer-diameter lip 31 and the second outer-diameter lip 32 in the outer diameter side are brought into slidably contact with the inner peripheral surface 11 of the housing 10 so as to seal a fluid. Further, the first inner-diameter lip 33 and the second inner diameter lip 34 are brought into contact with the groove bottom surface 24 of the attachment groove 21 so as to seal a fluid. The seal member 30 is collapsed in a diametrical direction between the groove bottom surface 24 of the attachment groove 21 of the shaft member 20 and the inner peripheral surface 11 of the housing 10. Further, the first outer-diameter lip 31 and the second outer-diameter lip 32 obtains a seal surface pressure with respect to an inner peripheral sliding surface of the housing 10 on the basis of an elastic restoring force, and the first inner-diameter lip 33 and the second inner-diameter lip 34 obtain a seal surface pressure with respect to the groove bottom surface 24.

A high-pressure side fluid H and a low-pressure side fluid L are shut off by the seal member 30, and the seal member 30 is pressed to the first groove side surface 22 in a low pressure side on the basis of the pressure difference so as to be compressed in an axial direction. Accordingly, the first inner-diameter lip 33 in the low pressure side is pressed to the first groove side surface 22. Further, the second outer-diameter lip 32 and the second inner-diameter lip 34 in the high pressure side are expanded, and the seal surface pressure of the first outer-diameter lip 31 and the first inner-diameter lip 33 is increased.

A plurality of cutouts 40 are provided in the first groove side surface 22 in the low pressure side of the attachment groove 21 to which the seal member 30 is pressed on the basis of the pressure difference. A plurality of cutouts 40 linearly extend in parallel to a first center line N1 passing through a center of the shaft member 20, and are provided in parallel at a predetermined interval. In an illustrated embodiment, the same number of cutouts are provided symmetrically in right and left sides with respect to a second center line N2 which is orthogonal to the first center line N1. Since the cutouts 40 extend all along a width of the first groove side surface 22, the cutout 40 on the first center line N1 is the shortest, and the cutout 40 becomes longer in accordance with being apart from the first center line N1.

In this case, since the cutout 40 aims to prevent the seal member 30 from slipping, the cutout 40 may be formed like radial rays in place of parallel lines.

In the case of the present embodiment, it is possible to vertically divide a mode into right and left forming molds with setting the second center line N2 to a vertical dividing line at a time of molding the shaft member 20, by forming the cutout 40 in a parallel pattern. Accordingly, it is possible to form the cutout 40 at the same time of molding the shaft member 20. In the case of machining the cutout 40, the pattern is not limited to the parallel pattern, but may be set to a diagonal pattern such as the radial rays or the like.

Next, a description will be given of an operation of the seal member attaching structure in accordance with the present embodiment mentioned above.

The seal member 30 is collapsed between the groove bottom surface 24 of the attachment groove 21 and the inner peripheral surface of the housing 10, and is pressed to the first groove side surface 22 in the low pressure side on the basis of the pressure difference between the high-pressure side fluid H and the low-pressure side fluid L. Accordingly, the thickness of the first inner-diameter lip 33 positioned in the low pressure side of the seal member 30 bites into each of the cutouts 40.

The fluid is sealed by the sealing contact between the first outer-diameter lip 31 and the second outer-diameter lip 32 of the seal member 30 in the sliding side with the inner peripheral surface of the housing 10, and by the contact portion between the groove bottom surface 24, and the first inner-diameter lip 33 and the second inner-diameter lip 34 in the stationary side with the attachment groove 21.

Even if the shaft member 20 and the housing 10 rotate relatively, and the sliding friction torque of the first outer-diameter lip 31 and the second outer-diameter lip 32 becomes larger than the static friction torque of the contact portion between the first inner-diameter lip 33 and the second inner-diameter lip 34, and the groove bottom surface 24, and the contact portion between the first inner-diameter lip 33 and the first groove side surface 22, it is possible to inhibit the seal member 30 from rotating on the basis of the structure that the first inner-diameter lip 33 partly bites into the cutout 40.

Further, since the cutout 40 is only provided in the first groove side surface 22, a seal function in the stationary side can be maintained by the groove bottom surface 24, the first inner-diameter lip 33 and the second inner-diameter lip 34.

In the present embodiment, there is shown the embodiment in which the cutout 40 is provided only in the first groove side surface 22 forming the low pressure side, however, the cutout 40 may be provided in both of the first grove side surface 22 and the second groove side surface 23. In accordance with this structure, it is possible to correspond to cases that whichever of them forms the low pressure side, and it is possible to apply to a case that the high pressure side and the low pressure side change.

In this case, the present embodiment is explained by employing the example of the X-ring as the seal member, however, can be widely applied to a squeeze packing such as an O-ring, a D-ring or the like. Further, in the present embodiment, the description is given of the seal member attaching structure provided with the attachment groove of the seal member in the shaft member side, however, the present embodiment can be applied to a seal member attaching structure of such a type that the seal member attachment groove is provided in the housing side, and the inner peripheral side of the seal member is brought into slidable contact with the shaft member. The latter embodiment does however not fall under the scope of the claims.

## Claims

1. A seal member (30) attaching structure for sealing an annular gap between two members (10, 20) mutually concentrically and relatively rotatably assembled and in which an annular seal member (30) formed of a rubber-like elastic material is attached to an attachment groove (21) disposed in one member (20) and brought into slidably sealing contact with the other member (10), the structure comprising said one member with said attachment groove, said annular seal member and rotation preventive means (40) for allowing the seal member (30) to partially bite a groove side surface (22) of the attachment groove, and preventing the seal member (30) from being relatively rotated, **characterised by** a plurality of cutouts (40) arranged in said groove side surface (22) in parallel with a first center line (N1) passing through a section center of the shaft member (20) in which the attachment groove (21) is disposed.

2. The seal member attaching structure according to claim 1, wherein the rotation preventive means (40) is a cutout (40) which is partially bitten by the seal member (30).

3. The seal member attaching structure according to claim 1 or 2, wherein the shaft member (20) is a resin formed member.

4. A seal member (30) co-rotation preventive shaft member (20) attached to a shaft hole in a housing (10) in such a manner as to be relatively rotatable with respect to the housing (10) via a predetermined annular gap, and comprising an attachment groove (21) to whose outer periphery a seal member (30) is attached, the shaft member (20) comprising said one member with said attachment groove, said annular seal member and rotation preventive means (40) for partially engaging the seal member (30) with a groove side surface (22) of the attachment groove, and preventing the seal member from (30) being relatively rotated, **characterised by** a plurality of cutouts (40) arranged in said groove side surface (22) in parallel with a first center line (N1) passing through a section center of the shaft member (20).

5. The seal member (30) co-rotation preventive shaft member (20) according to claim 5, wherein the shaft member is a resin formed member.

## Patentansprüche

1. Befestigungsstruktur für ein Dichtungsglied (30) zum Abdichten eines ringförmigen Spalts zwischen zwei zueinander konzentrischen Gliedern (10, 20), die bezüglich einander drehbar montiert sind und wobei ein ringförmiges Dichtungsglied (30), das aus einem kautschukartigen elastischen Material hergestellt ist, an einer in einem Glied (20) ausgebildeten Befestigungsnut (21) befestigt ist und mit dem anderen Glied (10) in Gleitdichtungskontakt gebracht wird, wobei die Struktur das eine Glied mit der Befestigungsnut, das ringförmige Dichtungsglied und ein Drehungsverhinderungsmittel (40) umfasst, um zu gestatten, dass das Dichtungsglied (30) teilweise in eine Nutenseitenfläche (22) der Befestigungsnut eingreift, und verhindern, dass das Dichtungsglied (30) relativ gedreht wird, **gekennzeichnet durch** mehrere Ausschnitte (40), die in der Nutenseitenfläche (22) parallel zu einer ersten Mittellinie (N1), die **durch** eine Schnittmitte des Wellenglieds (20), in dem die Befestigungsnut (21) ausgebildet ist, verläuft, angeordnet sind.

2. Befestigungsstruktur für ein Dichtungsglied nach Anspruch 1, wobei das Drehungsverhinderungsmittel (40) ein Ausschnitt (40) ist, in den das Dichtungsglied (30) teilweise eingreift.

3. Befestigungsstruktur für ein Dichtungsglied nach Anspruch 1 oder 2, wobei das Wellenglied (20) ein aus Harz geformtes Glied ist.

4. Das Mitdrehen des Dichtungsglieds (30) verhinderndes Wellenglied (20), das an einem Wellenloch in einem Gehäuse (10) befestigt ist, so dass es über einen vorbestimmten ringförmigen Spalt bezüglich des Gehäuses (10) relativ drehbar ist, und mit einer Befestigungsnut (21), an deren Außenumfang ein Dichtungsglied (30) befestigt ist, wobei das Wellenglied (20) das eine Glied mit der Befestigungsnut, das ringförmige Dichtungsglied und das Drehungsverhinderungsmittel (40) zum teilweisen Eingriff des Dichtungsglieds (30) in eine Nutenseitenfläche (22) der Befestigungsnut und Verhindern einer relativen Drehung des Dichtungsglieds (30) umfasst,
**gekennzeichnet durch** mehrere Ausschnitte (40), die in der Nutenseitenfläche (22) parallel zu einer durch eine Schnittmitte des Wellenglieds (20) verlaufenden ersten Mittellinie (N1) angeordnet sind.

5. Das Mitdrehen des Dichtungsglieds (30) verhinderndes Wellenglied (20) nach Anspruch 5, wobei das Wellenglied ein aus Harz geformtes Glied ist.

## Revendications

1. Dispositif de fixation d'un élément d'étanchéité (30) pour rendre étanche un espace annulaire entre deux éléments (10, 20) assemblés de façon mutuellement concentrique et relativement rotative, et dans lequel un élément d'étanchéité annulaire (30) formé d'une matière élastique de type caoutchouc est attaché à une rainure de fixation (21) formée dans un élément (20) et amené en contact d'étanchéité glissant avec l'autre élément (10), le dispositif comprenant ledit élément comportant ladite rainure de fixation, ledit élément d'étanchéité annulaire et le moyen de prévention de rotation (40) pour permettre à l'élément d'étanchéité (30) de mordre partiellement une surface latérale de rainure (22) de la rainure de fixation, et empêcher la rotation relative de l'élément d'étanchéité (30), **caractérisé par** une pluralité d'entailles (40) pratiquées dans ladite surface latérale de rainure (22) parallèlement à un premier axe médian (N1) passant à travers un centre de la section de l'élément d'arbre (20), dans lequel la rainure de fixation (21) est formée.

2. Dispositif de fixation d'un élément d'étanchéité selon la revendication 1, dans lequel le moyen de prévention de rotation (40) est une entaille (40) qui est partiellement mordue par l'élément d'étanchéité (30).

3. Dispositif de fixation d'un élément d'étanchéité selon la revendication 1 ou 2, dans lequel l'élément d'arbre (20) est un élément formé en résine.

4. Elément d'arbre (20) de prévention de co-rotation de l'élément d'étanchéité (30), attaché à un trou d'arbre dans un boîtier (10) de manière à pouvoir tourner de façon relative par rapport au boîtier (10) par l'intermédiaire d'un espace annulaire prédéterminé, et comportant une rainure de fixation (21) à la périphérie extérieure de laquelle un élément d'étanchéité (30) est attaché, l'élément d'arbre (20) comprenant ledit élément comportant ladite rainure de fixation, ledit élément d'étanchéité annulaire et le moyen de prévention de rotation (40) pour engager partiellement l'élément d'étanchéité (30) avec la surface latérale de rainure (22) de la rainure de fixation, et empêcher la rotation relative de l'élément d'étanchéité (30), **caractérisé par** une pluralité d'entailles (40) pratiquées dans ladite surface latérale de rainure (22) parallèlement à un premier axe médian (N1) passant à travers un centre de la section de l'élément d'arbre (20).

5. Elément d'arbre (20) de prévention de co-rotation de l'élément d'étanchéité (30) selon la revendication 4, dans lequel l'élément d'arbre est un élément formé en résine.
